# EUROPÄISCHE PATENTSCHRIFT

(11) **EP 1 347 294 B1**
(45) Veröffentlichungstag und Bekanntmachung des Hinweises auf die Patenterteilung: **22.02.2012**
(21) Anmeldenummer: 03004862.3
(22) Anmeldetag: 06.03.2003
(51) Int. Cl.: G01N 25/50

(54) **Brandtestautomat**
Automatic combustion test device
Dispositif de test automatique de combustion

(30) Priorität: 19.03.2002 DE 10212068
(43) Veröffentlichungstag der Anmeldung: 24.09.2003
(73) Patentinhaber: Underwriters Laboratories Inc, Northbrook, IL 60062-2096 (US)
(72) Erfinder: Sarabi, Bahman, Dr., 47803 Krefeld (DE); Thieler, Wilfried, 47839 Krefeld (DE); Kunert, Bernd, 51381 Leverkusen (DE)
(74) Vertreter: Seemann, Ralph

(56) Entgegenhaltungen:
- US-A- 3 532 435
- US-A- 4 055 259
- US-A- 5 397 998
- ANGELO R W; ARMSTRONG E J; BAUMANN W H; JOHNSTON L H: "Determining the Dynamic Oxygen Index of Insulated Fine Wire", IBM TECHNICAL DISCLOSURE BULLETIN, vol. 19, no. 11, 1 April 1977 (1977-04-01) , pages 4107-4108, New York, US

## Beschreibung

Die Erfindung betrifft einen Brandtestautomaten und ein Verfahren zur Durchführung von Brandtests.

Aus dem Stand der Technik sind Brandtestautomaten für die Durchführung von unterschiedlichen Arten von Brandtests bekannt. Die Durchführung solcher Brandtests ist genormt, und zwar beispielsweise in BS ISO 4589, ASTM D 2863 und anderen Standards.

Der Brandtest gemäß ASTM D 2863 wird auch als "Oxygen Index" oder als "Low Oxygen Index" (LOI) bezeichnet. Bei diesem Brandtest geht es um die Ermittlung des minimalen Sauerstoffgehalts in einer Sauerstoff / Stickstoff-Atmosphäre, der ausreicht, um einen Probekörper kerzenförmig über die Messstrecke von 50 mm abzubrennen oder die Flamme über die Zeitdauer von mindestens 180 Sekunden zu erhalten.

Brandtestgeräte zur Durchführung eines solchen LOI Tests sind kommerziell von der Firma Fire Testing Technology Limited, Incorporating Stanton Redcroft bekannt. Diese aus dem Stand der Technik bekannten Brandtestgeräte haben einen Glaszylinder, durch den eine Brennkammer realisiert ist. In den Glaszylinder wird manuell eine zu testende Probe eingebracht.

Zur Ermittlung des LOI sind dabei in der Regel mehrere aufeinander folgende Brandtestversuche erforderlich, die jeweils ca. 3 Minuten dauern. Bei einer Vielzahl von zu untersuchenden Materialien ist der Untersuchungsaufwand entsprechend groß.

Aus Angelo et al.: "Determining the Dynamic Oxygen Index of Insulated Fine Wire", IBM TECHNICAL DISCLOSURE BULLETIN, Bd. 19, Nr. 11, 1977, Seiten 4107 - 4108, ist eine Vorrichtung zur Durchführung eines LOI-Tests an einer Isolierbeschichtung eines Drahtes bekannt. Die Vorrichtung umfasst eine zylindrische Brennkammer aus Glas. Der beschichtete Draht wird für den LOI-Test von einer Rolle oberhalb der Brennkammer abgerollt, vertikal nach unten durch die Brennkammer geführt und auf einer zweiten Rolle wieder aufgerollt. Für den Test wird die Isolierschicht in der Brennkammer an einer Stelle entzündet. Während die Flamme sich am Draht entlang frisst, wird der Draht von der oberen Rolle abgespult. Dabei wird die Geschwindigkeit so eingestellt, dass die Brandstelle in der Brennkammer ortsfest bleibt. Im Verlaufe des Tests wird der Sauerstoffgehalt in der Brennkammer bis zum Erlöschen der Flamme schrittweise reduziert. Gleichzeitig verlangsamt sich die Abrollgeschwindigkeit des Drahtes bis zum Stillstand.

Der Erfindung liegt die Aufgabe zu Grunde einen Brandtestautomaten zu schaffen sowie ein Verfahren zur Durchführung eines Brandtests.

Die der Erfindung zu Grunde liegende Aufgabe wird mit den Merkmalen der unabhängigen Patentansprüche jeweils gelöst. Bevorzugte Ausführungsformen der Erfindung sind in den abhängigen Patentansprüchen angegeben.

Die Erfindung erlaubt es die Durchführung von Brandtests ganz erheblich zu rationalisieren und zwar sowohl was die Kosten für die Durchführung von Brandtests als auch die Durchlaufzeit betrifft. Veraussetzung hierfür ist, dass für die Untersuchung eines bestimmten Materials mehrere Proben dieses Materials in einem Probensatz zusammengefasst werden.

Mit den Proben eines solchen Probensatzes wird dann gleichzeitig in jeweils einer Brennkammer ein Brandtest durchgeführt und zwar bei unterschiedlichen fest vorgegebenen Sauerstoff / Stickstoff-Mischungsverhältnissen.

Beträgt beispielsweise ein Referenzwert für die Durchführung des Brandtests 29 % Sauerstoff, so kann dieser Referenzwert für eine der Brennkammern gewählt werden. Dann ist es vorteilhaft, die Sauerstoffkonzentration in einer weiteren Brennkammer niedriger als den Referenzwert zu wählen, zum Beispiel 27 %, und in ein oder mehreren weiteren Brennkammern höhere Sauerstoffkonzentrationen, die zum Beispiel in 2 %-Schritten gestaffelt sind. Auf diese Art und Weise erhält man schnell eine qualitative Aussage darüber, ob ein zu untersuchendes Material bessere oder schlechtere Eigenschaften als ein Referenzmaterial aufweist.

Wenn es sich herausstellt, dass das zu untersuchende Material bessere oder wesentlich bessere Eigenschaften als das Referenzmaterial aufweist, so kann zusätzlich ein kompletter normgerechter Test nach ASTM D 2863 bzw. BS ISO 4589 durchgeführt werden. Von besonderem Vorteil ist dabei, dass die Erfindung eine effiziente Vorauswahl von interessant erscheinenden Materialien erlaubt, die dann gegebenenfalls nach der getroffenen Vorauswahl im Detail näher untersucht werden. Im Vergleich zum Stand der Technik ist dies eine besondere Effizienzsteigerung, da die im Stand der Technik verwendeten Brandtestgeräte für jede zu untersuchende Probe einen kompletten normgerechten Test durchrühren.

Erfindungsgemäß wird die Rationalisierung der Durchführung von Brandtests dadurch erreicht, dass die Proben eines zu testenden Probensatzes zu den Brennkammern gefördert werden, während ein Brandtest läuft. Die Zuführung der Proben erfolgt also automatisch, wobei für die Zuführung die Zeit eines gerade ablaufenden Brandtests genutzt wird.

Nach einer bevorzugten Ausführungsform der Erfindung erfolgt auch die Reinigung der Brennkammern voll automatisch. Hierzu werden nach einer vorgegebenen Anzahl von Brandtests oder nachdem festgestellt worden ist, dass eine Reinigung erforderlich ist, die Glasabdeckungen der Brennkammern automatisch gelöst und mittels Bürsten gereinigt. Nach der Reinigung werden die Glasabdeckungen wieder in die Ausgangsposition zurückgebracht.

Nach einer weiteren bevorzugten Ausführungsform der Erfindung ist eine Datenschnittstelle zu einem Laborinformationsmanagementsystem (LIMS) vorgesehen. Dies erlaubt es einerseits Daten zur Spezifizierung von zu testenden Proben an den Brandtestautomaten zu übertragen und andererseits durch die Durchführung von Brandtests gewonnene Brandtest-Daten an das LIMS auszugeben.

Erfindungsgemäß ist für jede der Brennkammern eine separate Probenaufnahmeeinheit vorgesehen. Jede Probenaufnahmeeinheit dient zur Aufnahme einer zu testenden Probe und zur Aufnahme einer bereits getesteten Probe aus der entsprechenden Brennkammer. Während der Durchführung eines Brandtests wird also eine Probe zu jeder Probenaufnahmeeinheit mittels entsprechender Fördermittel zugeführt.

Nachdem der Brandtest beendet worden ist, werden die Glasabdeckungen der Brennkammern entfernt, so dass jede der Probenaufnahmeeinheiten mit deren anderen Ende eine getestete Probe greifen kann - sofern diese nicht vollständig abgebrannt ist. Die Probenaufnahmeeinheit schwenkt dann um 180° und wirft die getestete Probe in einen Entsorgungsschacht, während die zu testende Probe in die entsprechende Brennkammer eingebracht wird.

Nach einer weiteren bevorzugten Ausführungsform der Erfindung weist der Brandtestautomat Sensoren zur Identifizierung von zu testenden Proben auf; hierbei handelt es sich vorzugsweise um einen oder mehrere Barcode Sensoren.

Dabei ist es besonders vorteilhaft, wenn jede der zu testenden Proben mittels eines Barcodes eindeutig identifiziert ist. Das LIMS überträgt dann die Codes der zu testenden Proben an den Brandtestautomaten, der diese aus einem Probenregister vereinzelt und entsprechend den Vorgaben des LIMS den Brennkammern zuführt und die Brandtests entsprechend durchführt.

Im weiteren werden bevorzugte Ausführungsformen der Erfindung mit Bezugnahme auf die Zeichnungen näher erläutert. Es zeigen:
- Figur 1: eine perspektivische Ansicht einer Ausführungsform eines erfindungsgemäßen Brandtestautomaten,
- Figur 2: eine Draufsicht auf den Brandtestautomaten der Figur 1,
- Figur 3: ein Flussdiagramm zur Darstellung einer Ausführungsform eines erfindungsgemäßen Verfahrens für den Brandtest.

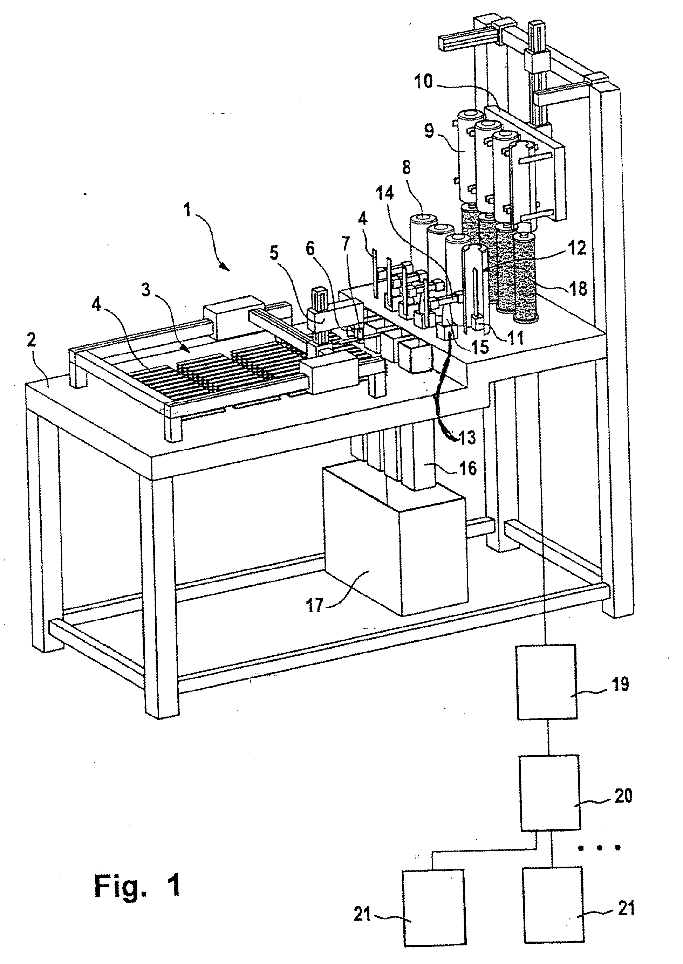

Die Figur 1 zeigt einen Brandtestautomaten 1. Der Brandtestautomat 1 hat einen Tisch 2 auf dem sich ein Magazin 3 für zu testende Proben 4 befindet. Die Proben 4 können mittels eines Probenaufnahmegreifers 5, der in X-Y Richtung verfahrbar ist, vereinzelt werden.

Vorzugsweise weist der Probenaufnahmegreifer 5 einen Barcode-Leser 6 für die Magazin- und/oder Probenerkennung auf. Ferner ist an dem Probenaufnahmegreifer 5 ein Probenentnahmeschieber 7 angeordnet, der um 90° schwenkbar ist.

Der Probenaufnahmegreifer 5 kann beispielsweise einen Probenentnahmesauger für die Aufnahme von einzelnen Proben 4 aufweisen.

Auf dem Tisch 2 sind ferner vier gleich aufgebaute Brennkammern 8 angeordnet. Jede der Brennkammern 8 hat einen Glaszylinder 9, der mittels einer Einrichtung 10 von der jeweiligen Brennkammer 8 lösbar ist. In jeder der Brennkammern 8 befindet sich eine Messklemme 11 zur Aufnahme einer Probe 4 sowie ein Heizdraht 12 und Sensoren für die Erfassung von Brandtestdaten.

Zwischen dem Magazin 3 mit dem Probenaufnahmegreifer 5 und den Brennkammern 8 befinden sich vier Probenaufnahmeeinheiten 13, wobei jede der Probenaufnahmeeinheiten 13 zu einer der Brennkammern 8 zugeordnet ist. Jede der Probenaufnahmeeinheiten 13 hat einen Aufnahmeträger 14, der um eine Achse 15 um 180° schwenkbar ist. Jede der Probenaufnahmeeinheiten 13 kann gleichzeitig zwei Proben 4 aufnehmen, und zwar je eine Probe an jedem Ende des Aufnahmeträgers 14.

Zwischen dem Magazin 3 und den Probenaufnahmeeinheiten 13 befinden sich ferner die vier Entsorgmigsschächte 16, wobei jeder der Entsorgungsschächte 16 einer Probenaufnahmeeinheit 13 zugeordnet ist. Die Entsorgungsschächte 16 sind vertikal nach unten gerichtet. Unterhalb der Entsorgungsschächte 16 befindet sich ein Container 17 zur Aufnahme von getesteten Proben.

Unterhalb der Einrichtung 10 befindet sich vier Bürsten 18. Zur Reinigung der Glaszylinder 9 fährt die Einrichtung 10 zu den Brennkammern 8 und hebt die Glaszylinder 9 nach oben weg. Danach fährt die Einrichtung 10 in die in der Figur 1 gezeigte Position. Im nächsten Schritt bewegt sich die Einrichtung 10 dann nach unten, so dass die Glaszylinder 9 über die Bürsten 18 gefahren werden. Dadurch werden die Glaszylinder 9 gereinigt. Nach der erfolgen Reinigung werden die Glaszylinder 9 von der Einrichtung 10 wieder in die Ausgangsposition zurückgebracht.

Der Brandtestautomat 1 hat ferner eine Steuerung 19 zur Datenerfassung und zur Steuerung der verschiedenen Aktuatoren des Brandtestautomaten 1. Die Steuerung 19 ist mit einem Laborinformationsmanagementsystem (LIMS) 20 verknüpft. Von dem LIMS 20 erhält die Steuerung 19 Daten hinsichtlich der durchzuführenden Brandtests. Andererseits liefert die Steuerung 19 an das LIMS 20 die durch die Brandtestversuche ermittelten Brandtestdaten.

Auf das LIMS 20 kann über verschieden Client Computer 21 zugegriffen werden. Von einem solchen Client Computer 21 ist es einem autorisierten Benutzer möglich, einen Auftrag für durchzuführende Brandtests einzugeben, den Status eines solchen Auftrags abzufragen und auf die ermittelten Brandtestdaten zuzugreifen.

Für den Betrieb des Brandtestautomaten 1 wird zunächst das Magazin 3 mit Proben 4 bestückt. Dieser Vorgang kann automatisch zum Beispiel mittels eines Roboters erfolgen. Vorzugsweise werden immer vier Proben eines Probensatzes übereinander auf dieselbe Position in dem Magazin 3 gelegt.

Zur Durchführung eines Brandtests werden die vier zu testenden Proben eines Probensatzes nacheinander von dem Probenaufnahmegreifer 5 aufgenommen und zu einer der Probenaumahmeemheiten 13 gebracht. Eine Probe 4 wird dabei von dem dem Magazin 3 zugewandten Ende des Aufnahmeträgers 14 einer Probenaufnahmeeinheit 13 aufgenommen. Die Übergabe einer Probe 4 von dem Probenaufnahmegreifer 5 an einen Aufnahmeträgers 14 erfolgt dabei durch Schwenken des Probenaufnahmeschiebers 7, so dass die Probe 4 in eine vertikale Position gebracht wird.

Am Ende dieses Vorgangs befinden sich die vereinzelten Proben 4 des Probensatzes an den Aufnahmeträgern 14 der Probenaufnahmeeinheiten 13 in der in der Figur 1 gezeigten Position. Gleichzeitig zu diesem Vorgang kann ein Brandtest in den Brennkammern 8 durchgeführt werden.

Nach Beendigung des Brandtests werden die Glaszylinder 9 von der Einrichtung 10 angehoben, so dass sich die Brennkammern öffnen. Gegebenenfalls in den Brennkammern vorhandene getestete Proben 4 bzw. teilweise abgebrannte Proben 4 werden von den freien Enden der Aumahmeträger 14 der Probenaufnahmeeinheiten 13 aufgenommen.

Die Aufnahmeträger 14 werden dann um die Achsen 15 um 180° geschwenkt. Die zu testenden Proben 4 werden dann in die Brennkammern 8 eingebracht und dort in den Messklemmen 11 fixiert. Die Brennkammern 8 werden durch Herunterfahren der Einrichtung 10 wieder geschlossen, so dass der Brandtest beginnen kann.

Die an den Aufnahmeträgern 14 befindlichen getesteten Proben 4 bzw. teilweise abgebrannten Proben 4 werden losgelassen, so dass sie durch die Entsorgungsschächte 16 in den Container 17 fallen. Die Aufnahmeträger 14 sind dann zur Aufnahme von weiteren Proben 4 eines nachfolgend zu testenden Probensatzes frei.

Nach einigen Brandtests können die Glaszylinder 9 verrußen. In diesem Fall wird nach einem Brandtest zusätzlich zum Öffnen der Brennkammern 8 eine Reinigung der Glaszylinder 9 mittels der Bürsten 18 durchgeführt.

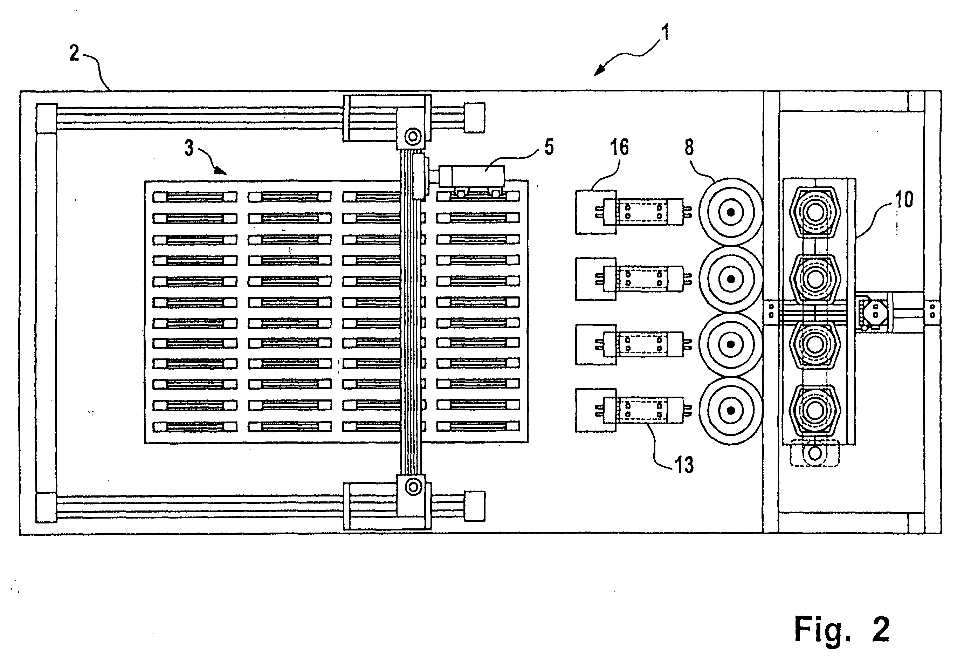

Die Figur 2 zeigt zur Verdeutlichung eine Draufsicht auf den Brandtestautomaten 1 der Figur 1.

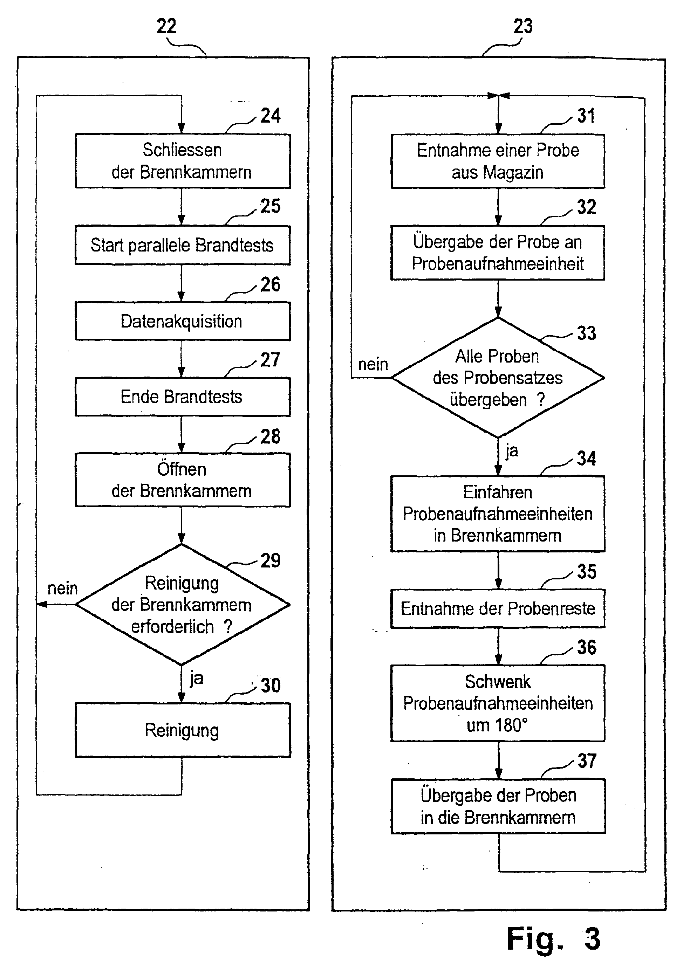

Die Figur 3 zeigt eine Ausführungsform eines erfindungsgemäßen Verfahrens zur Durchführung eines Brandtests. Erfindungsgemäß beinhaltet dieses Verfahren den Prozess 22 für die Durchführung der eigentlichen Brandtests sowie den Prozess 23 für die Vereinzelung und Förderung der Proben zu den Brennkammern.

Der Prozess 22 läuft dabei so ab, dass in dem Schritt 24 zunächst die Brennkammern geschlossen werden. In dem Schritt 25 werden dann verschiedene parallele Brandtests durchgeführt. Hierzu wird in den einzelnen Brennkammern eine vorgegebene Sauerstoff / Stickstoff-Atmosphäre erzeugt.

Besonders vorteilhaft ist es für eine der Brennkammern eine Referenzsauerstoffkonzentration eines Referenzmaterials zu wählen. Ferner ist es vorteilhaft für eine der Brennkammern einen geringeren Sauerstoffanteil als die Referenzsauerstoffkonzentration zu wählen und für ein oder mehrere weitere Brennkammern höhere Sauerstoffanteile, wobei diese vorzugsweise in 2 %-Schritten ansteigend gewählt sind.

In dem Schritt 26 werden die Brandtestdaten der einzelnen parallel ablaufenden Brandtests erfasst. In dem Schritt 27 werden die Brandtests beendet. Zwischen dem Start in dem Schritt 25 und der Beendung der Brandtests in dem Schritt 27 sind dabei ca. 3 Minuten vergangen.

In dem Schritt 28 werden die Brennkammern automatisch geöffnet. In dem Schritt 29 wird geprüft, ob eine Reinigung der Brennkammern erforderlich ist. Die Reinigung der Brennkammern kann dabei turnusmäßig nach einer vorgegebenen Anzahl von Brandtests erfolgen oder auch dann, wenn beispielsweise mittels Sensoren festgestellt wird, dass die Brennkammern verrußt sind.

Falls eine Reinigung der Brennkammern nicht erforderlich ist, werden diese in dem Schritt 24 wieder geschlossen, nachdem eine neue Charge von Proben in die Brennkammern eingebracht worden ist. Im gegenteiligen Fall erfolgt vor dem Schließen der Brennkammern zunächst eine Reinigung der Brennkammern in dem Schritt 30.

Der Prozess 23 dient zur Vereinzelung und Förderung von zu testenden Proben zu den Brennkammern. In dem Schritt 31 wird eine Probe aus einem Magazin entnommen. Diese Probe wird zu einer Probenaufnahmeeinheit transportiert und an die Probenaufnahmeeinheit übergeben. Dies erfolgt in dem Schritt 32.

In dem Schritt 33 wird geprüft, ob bereits alle Proben des zu testenden Probensatzes an die Probenaufnahmeeinheiten übergeben worden sind. Wenn dies nicht der Fall ist, werden die Schritt 31 und 32 wiederholt, und zwar so lange, bis alle Proben des Probensatzes übergeben worden sind.

Von besonderem Vorteil ist hierbei , dass gleichzeitig zu den Schritt 31 bis 33 des Prozess 23, das heißt während der Vereinzelung der zu testenden Proben, in dem Prozess 22 ein Brandtest für die Proben eines vorhergehenden Probensatzes durchgeführt wird. Nach der Durchführung dieses Brandtests in dem Prozess 22 werden die Brennkammern in dem Schritt 28 geöffnet.

Nach dem Öffnen der Brennkammern fahren dann die Probenaufnahmeeinheiten in dem Schritt 34 des Prozess 23 in die Brennkammern ein, um in dem Schritt 35 getestete Proben bzw. eventuelle Probenreste aufzunehmen.

In dem Schritt 36 werden die Probenaufnahmeeinheiten um 180° geschwenkt, so dass die zu testenden Proben in die Brennkammern eingebracht werden. Die zu testenden Proben werden in dem Schritt 37 an die Brennkammern übergeben. Ferner werden die getesteten Proben oder Probenreste auf diese Art und Weise aus den Brennkammern entfernt.

Die Brennkammern werden dann wieder geschlossen (Schritt 24 des Prozess 22), so dass erneut ein Brandtest durchgeführt werden kann. Während dieser Zeit werden dann die Schritte 31 bis 33 mit Bezug auf den nachfolgenden zu testenden Probensatz durchgeführt.

Neben der Zeit für die Durchführung der eigentlichen Brandtests in dem Prozess 22 kann auch die Zeit, die gegebenenfalls erforderlich ist, um die Brennkammern zu reinigen, für die Vereinzelung der Proben genutzt werden.

### Bezugszeichenliste

- Brandtest: 1
- Tisch: 2
- Magazin: 3
- Proben: 4
- Probenaufnahmegreifer: 5
- Barcodeleser: 6
- Probenaufnahmeschieber: 7
- Brennkammer: 8
- Glaszylinder: 9
- Einrichtung: 10
- Messklemme: 11
- Heizdraht: 12
- Probenaufüahmeeinheit: 13
- Aufnahmeträger: 14
- Achse: 15
- Entsorgungsschacht: 16
- Container: 17
- Bürsten: 18
- Steuerung: 19
- LIMS: 20
- Client Computer: 21
- Prozess: 22
- Prozess: 23

## Patentansprüche

1. Brandtestautomat mit einer Anzahl von parallel betreibbaren Brennkammern (8) und mit Fördermitteln (5, 7) zur Zuführung von Proben (4) eines zu prüfenden Probensatzes zu den Brennkammern während des Ablaufs eines Brandtests, wobei die Fördermittel eine Probenaufnahmeeinheit (13) für jede der Brennkammern aufweisen und jede der Probenaufnahmeeinheiten (13) zur Aufnahme einer getesteten Probe und einer zu testenden Probe ausgebildet ist.

2. Brandtestautomat nach Anspruch 1 mit einer lösbaren Glasabdeckung (9) für jede Brennkammer und mit Mitteln (10, 18) zur automatischen Reinigung der Glasabdeckungen.

3. Brandtestautomat nach Anspruch 2, wobei die Mittel zur automatischen Reinigung eine Reinigungsbürste (18) für jede der Glasabdeckungen aufweist.

4. Brandtestautomat nach Anspruch 1, 2 oder 3, wobei jede Brennkammer zumindest einen Sensor (11) zur Erfassung von Brandtestdaten aufweist.

5. Brandtestautomat nach einem der vorhergehenden Ansprüche 1 bis 4 mit einer Datenschnittstelle (19) zu einem Laborinformationsmanagementsystem (20) für die Ausgabe von Brandtestdaten und/oder die Eingabe von Daten zur Spezifizierung von zu prüfenden Probensätzen.

6. Brandtestautomat nach einem der vorhergehenden Ansprüche 1 bis 5, wobei die Brennkammern zur Durchführung eines Low Oxygen Index (LOI) Tests ausgebildet sind.

7. Brandtestautomat nach einem der Ansprüche 1 bis 6, wobei jede Probenaufnahmeeinheit zur Aufnahme einer getesteten Probe und einer zu testenden Probe an den gegenüberliegenden Enden eines Aufnahmeträgers (14) ausgebildet ist.

8. Brandtestautomat nach Anspruch 7, wobei jeder der Aufnahmeträger um eine senkrecht auf dem Aufnahmeträger stehende Achse (15) um 180° schwenkbar ist.

9. Brandtestautomat nach einem der vorhergehenden Ansprüche 1 bis 8, wobei die Fördermittel Mittel (5, 7) zur Vereinzelung von Proben und zur Zuführung von vereinzelten Proben zu den Probenaufnahmeeinheiten aufweisen.

10. Brandtestautomat nach einem der vorhergehenden Ansprüche 1 bis 9, wobei die Fördermittel Sensormittel zur Identifizierung der Proben eines zu testenden Probensatzes aufweisen, wobei es sich bei den Sensormitteln vorzugsweise um einen Barcode-Sensor handelt.

11. Verfahren zur Durchführung eines Brandtests mit folgenden Schritten:
- parallele Durchführung eines Brandtests an einem Probensatz in einer Anzahl von Brennkammern,
- Zuführung von Proben eines nachfolgenden zu testenden Probensatzes zu den Brennkammern während des Ablaufs des Brandtests des vorhergehenden Probensatzes mittels Fördermitteln, die eine Probenaufnahmeeinheit für jede der Brennkammern aufweisen, wobei jede der Probenaufnahmeeinheiten zur Aufnahme einer getesteten Probe und einer zu testenden Probe ausgebildet ist.

12. Verfahren nach Anspruch 11, **dadurch gekennzeichnet, dass** der Brandtest an Proben desselben Materials mit unterschiedlichen fest vorgegebenen Sauerstoff/Stickstoff-Mischungsverhältnissen parallel durchgeführt wird.

## Claims

1. A combustion test machine with a number of combustion chambers (8) operable in parallel with transport means (5, 7) for supplying specimens (4) of a set of specimens to be examined to the combustion chambers during the course of a combustion test, wherein the transport means include a specimen receiving unit (13) for each of the combustion chambers and each of the specimen receiving units (13) is constructed to receive a specimen that has been tested and a specimen that is to be tested.

2. A combustion test machine as claimed in Claim 1 with a removable glass cover (9) for each combustion chamber and with means (10, 18) for automatically cleaning the glass covers.

3. A combustion test machine as claimed in Claim 2, wherein the means for automatically cleaning includes a cleaning brush (18) for each of the glass covers.

4. A combustion test machine as claimed in Claim 1, 2 or 3, wherein each combustion chamber includes at least one sensor (11) for recording combustion test data.

5. A combustion test machine as claimed in one of the preceding Claims 1 to 4 with a data interface (19) to a laboratory information management system (20) for the output of combustion test data and/or the input of data for the specification of sets of specimens to be examined.

6. A combustion test machine as claimed in one of the preceding Claims 1 to 5, wherein the combustion chambers are constructed to conduct a Low Oxygen Index (LOI) test.

7. A combustion test machine as claimed in one of Claims 1 to 6, wherein each specimen receiving unit is constructed to receive a tested specimen and a specimen to be tested at the opposite ends of a receiving carrier (14).

8. A combustion test machine as claimed in Claim 7, wherein each of the receiving carriers is pivotable through 180° about a shaft (15) standing vertically on the receiving carrier.

9. A combustion test machine as claimed in one of the preceding Claims 1 to 8, wherein the transport means include means (5, 7) for separating specimens and for supplying separated specimens to the specimen receiving units.

10. A combustion test machine as claimed in one of the preceding Claims 1 to 9, wherein the transport means include sensor means for identifying the specimens of a set of specimens to be tested, wherein the sensor means are preferably a barcode sensor.

11. A method of conducting a combustion test with the following steps:
- conducting combustion tests in parallel on a set of specimens in a number of combustion chambers,
- supplying specimens of a set of specimens which is subsequently to be tested to the combustion chambers during the course of the combustion test on the preceding set of specimens by means of transport means, which include a specimen receiving unit for each of the combustion chambers, wherein each of the specimen receiving units is constructed to receive a specimen that has been tested and a specimen that is to be tested.

12. A method as claimed in Claim 11, **characterised in that** the combustion test is conducted in parallel on specimens of the same material with different predetermined oxygen/nitrogen mixture ratios.

## Revendications

1. Automate de test d'incendie comprenant un certain nombre de chambres de combustion (8) pouvant être exploitées en parallèle et des moyens de transport (5, 7) pour l'arrivée d'échantillons (4) d'un ensemble d'échantillons à tester aux chambres de combustion pendant le déroulement d'un test d'incendie, les moyens de transport présentant une unité de prélèvement d'échantillons (13) pour chacune des chambres de combustion et chacune des unités de réception d'échantillons (13) étant conçue pour la réception d'un échantillon testé et d'un échantillon à tester.

2. Automate de test d'incendie selon la revendication 1, comprenant un revêtement en verre (9) amovible pour chaque chambre de combustion et des moyens (10, 18) pour le nettoyage automatique des revêtements de verre.

3. Automate de test d'incendie selon la revendication 2, les moyens pour le nettoyage automatique présentant une brosse de nettoyage (18) pour chacun des revêtements de verre.

4. Automate de test d'incendie selon la revendication 1, 2 ou 3, chaque chambre de combustion présentant au moins un capteur (11) pour l'enregistrement de données de test d'incendie.

5. Automate de test d'incendie selon l'une des revendications précédentes 1 à 4 comprenant une interface de données (19) avec un système de gestion d'informations de laboratoire (20) pour l'édition de données de test d'incendie et/ou l'entrée de données pour la spécification d'ensembles d'échantillons à tester.

6. Automate de test d'incendie selon l'une des revendications précédentes 1 à 5, la chambre de combustion étant conçue pour la mise en oeuvre d'un test Low Oxygen Index (LOI).

7. Automate de test d'incendie selon l'une des revendications 1 à 6, chaque unité de réception d'échantillons étant conçue pour la réception d'un échantillon testé et d'un échantillon à tester sur les extrémités opposées d'un support de réception (14).

8. Automate de test d'incendie selon la revendication 7, chacun des supports de réception pouvant être basculé de 180° autour d'un axe (15) placé verticalement sur le support de réception.

9. Automate de test d'incendie selon l'une des revendications précédentes 1 à 8, les moyens de transport présentant des moyens (5, 7) pour l'individualisation d'échantillons et pour l'arrivée d'échantillons séparés aux les unités de réception d'échantillons.

10. Automate de test d'incendie selon l'une des revendications précédentes 1 à 9, les moyens de transport présentant des moyens de capteur pour l'identification des échantillons d'un ensemble d'échantillons à tester, sachant que, en ce qui concerne les moyens de capteur, il s'agit de préférence d'un capteur de code-barres.

11. Procédé pour la mise en oeuvre d'un test d'incendie comprenant les étapes suivantes :
- réalisation parallèle d'un test d'incendie sur un ensemble d'échantillons dans un certain nombre de chambres de combustion
- arrivée d'échantillons d'un ensemble d'échantillons consécutif à tester aux chambres de combustion pendant le déroulement du test d'incendie de l'ensemble d'échantillons précédent à l'aide de moyens de transport qui présentent une unité de prélèvement d'échantillons pour chacune des chambres de combustion, chacune des unités de prélèvement d'échantillons étant conçue pour la réception d'un échantillon testé et d'un échantillon à tester.

12. Procédé selon la revendication 11, **caractérisé en ce que** le test d'incendie est effectué en parallèle sur des échantillons du même matériau avec différents rapports de mélange oxygène/azote différents et prédéfinis de façon fixe.
